# EUROPEAN PATENT APPLICATION

(11) **EP 0 770 972 A2**
(43) Date of publication of application: **02.05.1997**
(21) Application number: 96117167.5
(22) Date of filing: 25.10.1996
(51) Int. Cl.: G06K 19/077

(54) **PC card comprising a frame into which one of back connectors is selectively integrated at a rear end thereof**

(30) Priority: 25.10.1995 JP 277477/95
(71) Applicant: JAPAN AVIATION ELECTRONICS INDUSTRY, LIMITED, Shibuya-ku, Tokyo (JP)
(72) Inventor: Miyamoto, Kunikazu, c/o Japan Aviation Electronics, Shibuya-ku, Tokyo (JP); Suzuki, Nobuaki, Tokyo (JP)
(74) Representative: Prüfer, Lutz H., Dipl.-Phys.

(57) **Abstract**

In a A PC card comprising a frame (14), a front connector (16), and a back connector (12, 12A), the frame comprises opposite side beams (22, 24) extending in parallel to each other and a front cross beam (16) extending between the opposite side beams at the front end thereof. The front connector (16) is integrally molded with the front cross beam. One of a plurality of back connectors (12, 12A) having a common size in an external form is selectively integrated with the frame at the rear end. Each of the back connectors includes at least one different connector section. The frame may further comprise a rear cross beam (34) extending between the opposite side beams at the rear end thereof. The rear cross beam supports the back connector. The back connector may have a pair of projections (72, 74) at longitudinal both ends thereof. The frame may have a pair of grooves (76, 78) to which the projections are fitted at opposite sides of the rear end of the opposite side beams to incorporate the back connector with the frame. The back connector may include a plurality of connector sections (44a, 46, 44b, 48).

## Description

### Background of the Invention:

This invention relates to a PC card.

As well known in the art, a PC card is a card which is inserted in a slot of a personal computer in conformity with JEIDA (Japan Electronic Industry Development Association) Ver. 4.2 and PCMCIA (Personal Computer Memory Card International Association) 2.1. Most of recent notebook-size personal computers are provided with slots for use with PC cards.

There are many types of PC cards: memory devises such as a SRAM (Static Random Access Memory), a flash memory, a hard disk, and so on, a MODEM (modulator/demodulator) card, a SCSI (Small Computer System Interface) card, a LAN (Local Area Network) card, or the like. The PC cards are classified according to the thickness into three types: type-I, type-II, and type-III while all of the PC cards have a width of 54.0 mm and a depth of 85.6 mm. The PC cards of type-I have the thickness of 3.3 mm and are mainly used as the memory cards. The PC cards of type-II have the thickness of 5 mm and are used for many purposes such as the MODEM card or the like. The PC cards of type-III have the thickness of 10.5 mm and are used as, for instance, the hard disk.

In the manner which will later be described, a conventional PC card comprises a frame, a front connector, a back or rear connector, a printed circuit board mounted on the frame, and top and bottom covers which cover the top and bottom of the frame and which enclose the printed circuit board therein. A number of electric parts are mounted on the printed circuit board. In general, the front connector is a plug connector while the back connector is a socket connector. The frame has front and rear ends spaced apart in a longitudinal direction, first and second opposite sides spaced apart in a lateral direction, and top and bottom surfaces spaced apart in a vertical direction.

The front connector lies at the front end of the frame and is attached to the printed circuit board. The back connector lies at the rear end of the frame. The frame is provided with a connector housing for receiving the back connector. The front connector has a number of female contacts. The back connector comprises at least one connector section which receives a plurality of pin contacts. The female contacts of the front connector and the pin contacts of the back connector are connected to the electronic parts mounted on the printed circuit board.

The frame includes a forward cross beam extending between opposite side beams. The forward cross beam and the opposite side beams are molded integrally with a rear beam which is molded integrally with the connector housing for receiving the back connector.

Such a PC card is designed to be inserted into a slot in an electronic apparatus such as a notebook-size personal computer or a laptop computer. When the PC card is inserted into the slot of the electronic apparatus, the female contacts in the front connector acting as the plug connector are electrically connected to pin contacts of a socket connector in the electronic apparatus. On the other hand, the pin contacts in the back connector serving as the socket connector are electrically connected to female contacts in a plug connector of a cable harness.

The conventional PC card comprises the frame, the front connector, and the back connector which are independent from each other. This results in the necessity of a lot of parts and presents a serious inconvenience in managing the parts. In addition, the conventional PC card has lower strength because the PC card are manufactured by assembling such a lot of parts. Furthermore, it is difficult to assemble the parts because error increases with assembling between the parts.

In order to solve the above-mentioned disadvantages, various cards other than the PC cards in which the frame and the front connector are integrally molded have already proposed in, for example, Japanese Unexamined Patent Publication or Kokai Nos. Hei 3-78,184 (78,184/1991), Hei 3-96,394 (96,394/1991), Hei 3-253,398 (253,398/1991), Hei 4-201,394 (201,394/1992), and Hei 4-214,397 (214,397/1992). However, the cards disclosed in those publications are memory cards or IC cards each of which is not provided with the back connector.

On the other hand, PC cards in which the frame and the back connector are integrally molded have already been proposed in, for example, United States Patents Nos. 5,207,586 and 5,224,397. In the present specification, one in which the frame and the back connector are integrally molded is called a back connector integral type frame. It is described in the specification of United States Patent No. 5,207,586 that the front connector can be integrally molded with the frame.

As mentioned above, the PC cards are used for a wide variety of purposes. However, the back connectors connected to the external apparatuses have different shapes in dependency upon the external apparatuses connected thereto while the front connectors connected to the personal computers have one type in common. Accordingly, the PC card comprising the frame and the back connector integrally molded is applicable to only one particular purpose. It is necessary to use a different back connector integral type frame in correspondence to a different purpose. In other words, the PC card comprising the back connector integral type frame having a different structure and a different shape is required in dependence upon the purpose.

### Summary of the Invention:

It is therefore an object of this invention to provide a PC card comprising a frame, which is capable of corresponding to different purposes.

It is another object of this invention to provide a PC card of the type described, which is capable of reducing the number of parts.

Other objects of this invention will become clear as the description proceeds.

On describing the gist of this invention, it is possible to understand that a PC card comprises a frame on which a printed circuit board is mounted. The printed circuit board mounts a number of electronic parts thereon. The frame has front and rear ends. A front connector lies at the front end of the frame to connect to a personal computer. A back connector lies at the rear end of the frame to connect to an external apparatus.

According to an aspect of this invention, the frame comprises opposite side beams extending in parallel to each other and a front cross beam extending between the side beams at the front end thereof. The front connector is integrally molded with the front cross beam. One of a plurality of back connectors having a common size in an external form is selectively integrated with the frame at the rear end. Each of the back connectors includes at least one different connector section.

Preferably, the frame may further comprise a rear cross beam extending between the opposite side beams at the rear end thereof. The rear cross beam is for supporting the back connector. The back connector may have a pair of projections at longitudinal both ends thereof. The frame may have a pair of grooves to which the projections are fitted at opposite sides of the rear end of the opposite side beams to incorporate the back connector with the frame. The back connector may include a plurality of connector sections.

### Brief Description of the Drawing:

Fig. 1 is an exploded perspective view of a first conventional PC card;
Fig. 2 is an exploded perspective view of a second conventional PC card;
Fig. 3 is an exploded perspective view of a PC card according to a first embodiment of this invention as viewed from the rear and obliquely above;
Fig. 4 is an assembly view in perspective of a frame integral type connector and a back connector for use in the PC card illustrated in Fig. 3 as viewed from the rear and obliquely below;
Fig. 5A through Fig. 5D collectively show the frame integral type connector for use in the PC card illustrated in Fig. 3:
Figs. 6A through 6C collectively show the back connector for use in the PC card illustrated in Fig. 3:
Fig. 7 shows relationship of position between the back connector illustrated in Figs. 6A through Fig. 6C and the frame integral type connector and shows a state where the PC card is coupled to cable connectors serving as mating connectors;
Fig. 8 is a perspective view of the PC card illustrated in Fig. 3;
Fig. 9A through 9C collectively show another back connector for use in a PC card according to a second embodiment of this invention;
Fig. 10 shows relationship of position between the back connector illustrated in Figs. 9A through 9C and the frame integral type connector and shows cable connectors serving as mating connectors to be coupled to the PC card;
Fig. 11 is a rear view of a PC card according to a third embodiment of this invention;
Fig. 12 is a rear view of a PC card according to a fourth embodiment of this invention; and
Fig. 13 is a rear view of a PC card according to a fifth embodiment of this invention.

### Description of the Preferred Embodiments:

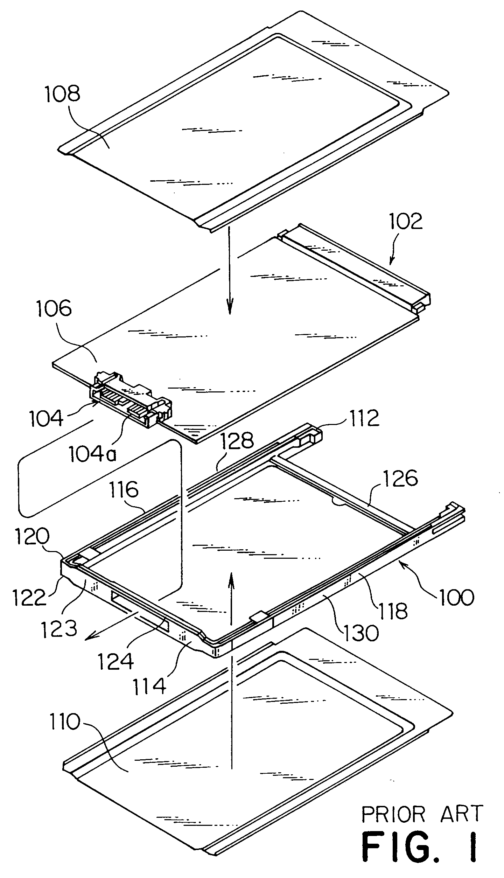

Referring to Fig. 1, a first conventional PC card will be described in order to facilitate an understanding of this invention. The illustrated PC card comprises a frame 100, a front connector 102, a back or rear connector 104, a printed circuit board 106 mounted on the frame 100, and top and bottom covers 108 and 110 which cover the top and bottom of the frame 100 and enclose the printed circuit board 106 therein. A number of electronic parts (not shown) are mounted on the printed circuit board 106. In the illustrated PC card, the front connector 102 is a plug connector while the back connector 104 is a socket connector 104.

The frame 100 has front and rear ends 112 and 114 spaced apart in a longitudinal direction, first and second opposite sides 116 and 118 spaced apart in a lateral direction, and top and bottom surfaces 120 and 122 spaced apart in a vertical direction.

The front connector 102 lies at the front end 112 of the frame 100 and is attached to the printed circuit board 106. The back connector 104 lies at the rear end 114 of the frame 100. The frame 100 is provided with a connector housing 123 for receiving the back connector 104. The front connector 102 has a number of female contacts (not shown) while the back connector 104 has a plurality of pin contacts 104a. The female contacts of the front connector 102 and the pin contacts of the back connector 104 are connected to the electric parts mounted on the printed circuit board 106.

The frame 100 includes a forward cross beam 126 which extends between opposite side beams 128 and 130. The forward cross beam 126 and the opposite side beams 128 and 130 are molded integrally with a rear beam 132 which is molded integrally with the connector housing for receiving the back connector 104.

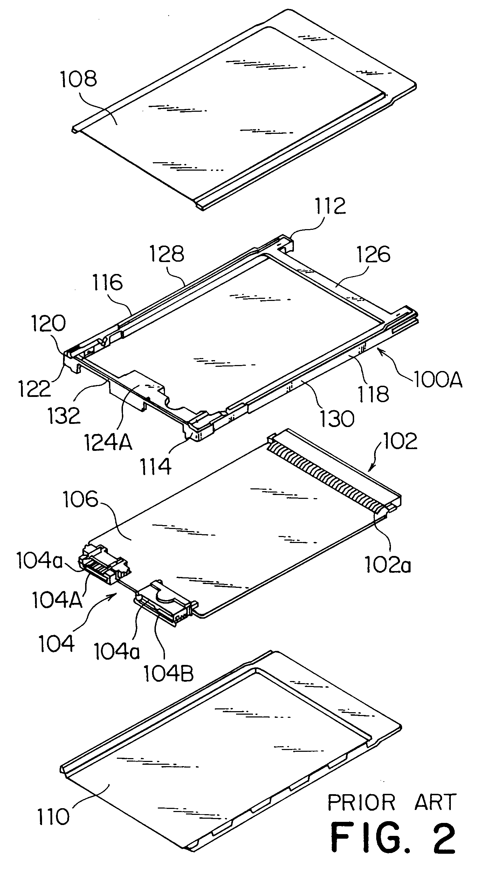

Referring to Fig. 2, a second conventional PC card will be described in order to further facilitate an understanding of this invention. The illustrated PC card is similar in structure to that illustrated in Fig. 1 except that the back connector and the frame are modified in the manner which will become clear. That is, the illustrated PC card comprises, as the back connector 104, two connector sections 104A and 104B of different types. In addition, a frame 100A includes a connector housing 124A for receiving the connector sections 104A and 104B. The front connector 102 has a number of female contacts 102a.

Such a PC card is designed to be inserted into a slot in an electronic apparatus (not shown) such as a notebook-size personal computer or a laptop computer. When the PC card is inserted into the slot of the electronic apparatus, the female contacts 102a of the front connector 102 acting as the plug connector are electrically connected to pin contacts (not shown) of a socket connector (not shown) in the electronic apparatus. On the other hand, the pin contacts of the back connector 104 serving as the socket connector are electrically connected to female contacts (not shown) in a plug connector (not shown) of a cable harness (not shown).

As shown in Figs. 1 and 2, each of the conventional PC cards comprises the frame 100 (100A), the front connector 102, and the back connector 104 which are independent from each other. This results in necessity of a lot of parts and presents a serious inconvenience in managing the parts. In addition, the conventional PC cards have lower strength because the PC cards are manufactured by assembling such a lot of parts. Furthermore, it is difficult to successfully assemble the parts because error increases in assembling of the parts.

In order to remove the above-mentioned disadvantages, various cards other than the PC cards in which the frame and the front connector are integrally molded are already proposed, for example, in Japanese Unexamined Patent Publication or Kokai No. Hei 3-78,184 (78,184/1991), in Japanese Unexamined Patent Publication or Kokai No. Hei 3-96,394 (96,394/1991), in Japanese Unexamined Patent Publication or Kokai No. Hei 3-253,398 (253,398/1991), in Japanese Unexamined Patent Publication or Kokai No. Hei 4-201,394 (201,394/1992), and in Japanese Unexamined Patent Publication or Kokai No. Hei 4-214,397 (214,397/1992). However, the cards disclosed in those publications are memory cards or IC cards each of which is not provided with the back connector.

On the other hand, PC cards in which the frame and the back connector are integrally molded are already proposed, for example, in United States Patent No. 5,207,586 issued to Duncan D. MacGregor et al and in United States Patent No. 5,224,397 issued to Jone W. Anhalt. In the present specification, one in which the frame and the back connector are integrally molded is called a back connector integral type frame. It is described in the specification of United States Patent No. 5,207,586 that the front connector can be integrally molded with the frame.

As mentioned in the preamble of the instant specification, the PC cards are used for a wide variety of purposes. However, the back connectors connected to the external apparatuses have different shapes in dependency upon the external apparatuses connected thereto while the front connectors connected to the personal computers have one type in common. Accordingly, the conventional PC card comprising the frame and the back connector which are integrally molded is applicable to only one particular purpose. It is necessary to use a different back connector integral type frame in correspondence to a different purpose. In other words, the PC card comprising the back connector integral type frame having a different structure and a different shape is required in dependence upon the purpose.

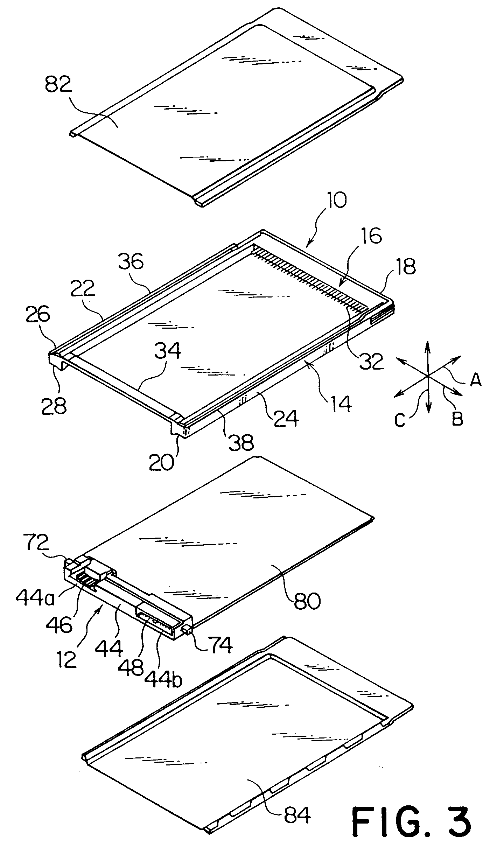

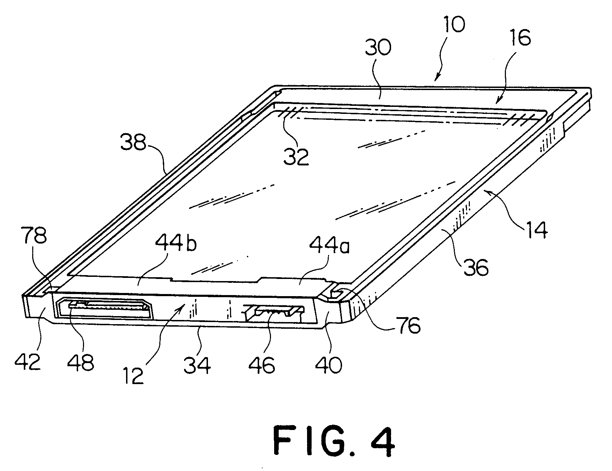

Referring to Figs. 3 and 4, description will proceed to a PC card according to a first embodiment of this invention. Fig. 3 is an exploded perspective view of the PC card as viewed from the rear and obliquely above. Fig. 4 is an assembly view in perspective of a frame integral type connector and a back connector in the PC card illustrated in Fig. 3 as viewed from the rear and obliquely below.

As illustrated in Figs. 3 and 4, the PC card includes two connectors, namely, the frame integral type connector depicted at 10 and the back connector depicted at 12. The frame integral type connector 10 is a connector where a frame 14 is integrally molded with a front connector 16.

The frame 14 has front and rear ends 18 and 20 spaced apart in a longitudinal direction indicated by arrow A, first and second opposite sides 22 and 24 spaced apart in a lateral direction indicated by arrow B, and top and bottom surfaces 26 and 28 spaced apart in a vertical direction indicated by arrow C.

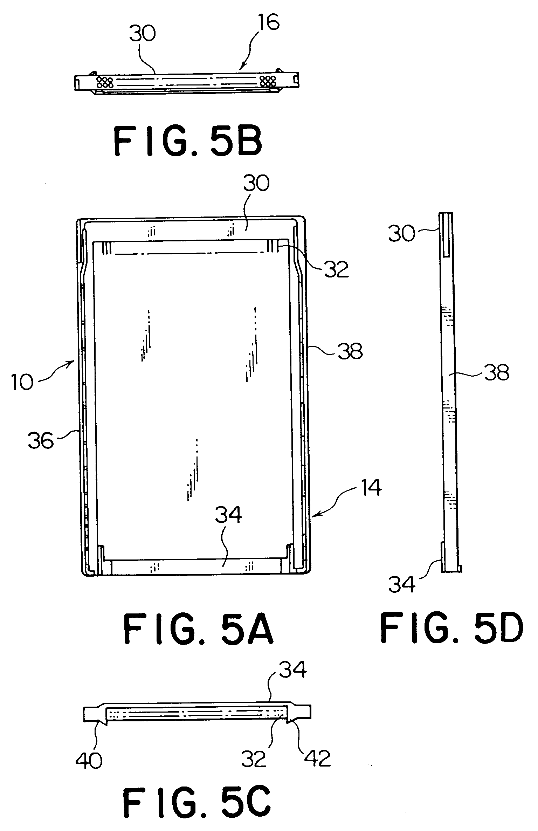

Figs. 5A through 5D collectively show the structure of the frame integral type connector 10. Fig. 5A is a plan view of the frame integral type connector 10, Fig. 5B is a front view of the frame integral type connector 10 as view from the front, Fig. 5C is a rear view of the frame integral type connector 10 as viewed from the rear, and Fig. 5D is a right-hand side view of the frame integral type connector 10.

Referring to Figs. 5A through 5D in addition to Figs. 3 and 4, the front connector 16 is integrally molded with the frame 14 at the front end 18 of the frame. The front connector 16 consists of a plug housing 30 and sixty-eight female contacts 32 which are received in the plug housing 30. That is, the front connector 16 acts as a plug connector.

The frame 14 includes a rear cross beam 34 which is a thin board in configuration and which extends in the lateral direction indicated by an arrow B at the rear end 20 thereof. The rear cross beam 34 extends between opposite side beams 36 and 38. The rear cross beam 34 and the opposite side beams 36 and 38 are integrally molded with the front connector 16. The rear cross beam 34 holds the opposite side beams 36 and 38 at the rear end and supports the back connector 12 in the manner which will later be described. In addition, the plug housing 30 is operable as a front cross beam extending between the opposite side beams 36 and 38.

The frame 14 comprises a pair of opposite side walls 40 and 42 which are apart from each other in the lateral direction indicated by the arrow B at the rear end 20 thereof. The opposite side walls 40 and 42 project from the respective opposite side beams 36 and 38 into the inside and support the above-mentioned rear cross beam 34. In other words, the rear cross beam 34 acts as a bridge between the pair of opposite side walls 40 and 42.

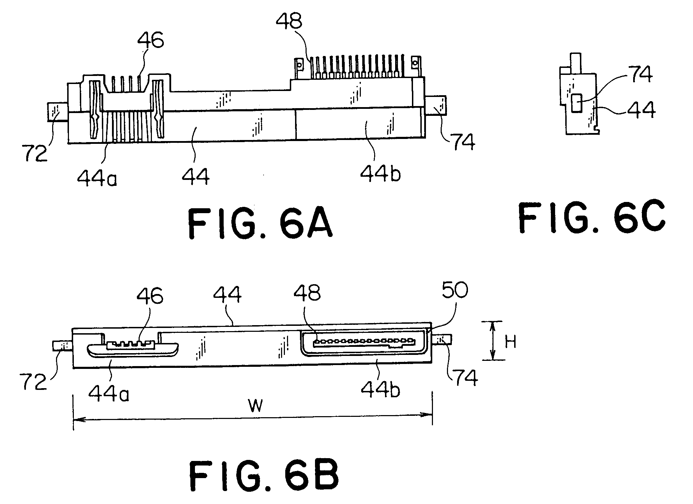

Figs. 6A through 6C collectively show the structure of the back connector 12. Fig. 6A is a plan view of the back connector 12, Fig. 6B is a front view of the back connector 12, and Fig. 6C is a right-hand side view of the back connector 12.

Referring to Figs. 6A through 6C in addition to Figs. 3 and 4, the back connector 12 comprises a socket housing 44 including first and second socket sections 44a and 44b, and first and second pin contacts 46 and 47 which are received in the first and the second socket sections 44a and 44b, respectively. The first socket section 44a and the first pin contacts 46 compose a first connector section while the second socket section 44b and the second pin contacts 47 compose a second connector section. In the example being illustrated, the first pin contacts 46 received in the first socket section 44a are equal in number to four while the second pin contacts 48 received in the second socket section 44b are equal in number to fifteen. The fifteen second pin contacts 48 are enclosed with a shell 50. That is, the back connector 12 serves as a socket connector.

The back connector 12 further comprises a pair of projections 72 and 74 at longitudinal both ends thereof. A pair of grooves 76 and 78 are cut in the pair of opposite side walls 40 and 42, respectively, as shown in Fig. 4. The pair of the projections 72 and 74 are fitted in the pair of grooves 76 and 78, respectively. The back connector 12 is integrated into the frame integral type connector 10 at the rear end with the projections 72 and 74 fitted in the grooves 76 and 78.

As shown in Fig. 3, a printed circuit board 60 is mounted on the frame integral type connector 10. A number of electronic parts (not shown) are mounted on the printed circuit board 80. In addition, the PC card comprises top and bottom covers 82 and 84 which cover the top and the bottom surfaces 26 and 28 and which enclose the printed circuit board 80 therein.

Such a PC card is designed to be inserted into a slot in an electronic apparatus (not shown) such as a notebook-size personal computer or a laptop computer. When the PC card is inserted into the slot of the electronic apparatus, the female contact 32 of the front connector 16 acting as the plug connector is electrically connected to pin contacts (not shown) of a socket connector (not shown) in the electronic apparatus.

Description will be made about the relationship between a number of the pin contacts in the back connectors and the purposes of the PC cards. When the pin contacts are equal in number to four or seven, the PC card is used as a FAX/MODEM card. When the pin contacts are equal in number to nine, the PC card is used as an ISDN card. When the pin contacts are equal in number to fifteen, the PC card is used as a LAN card. When the pin contacts are equal in number to twenty-five, the PC card is used as a SCSI card. As described above, the PC card can be used for various purposes by changing a combination of the numbers of the pin contacts in the back connector. In addition, the back connector may be provided with an LED lens for ascertaining operation of the PC card in question.

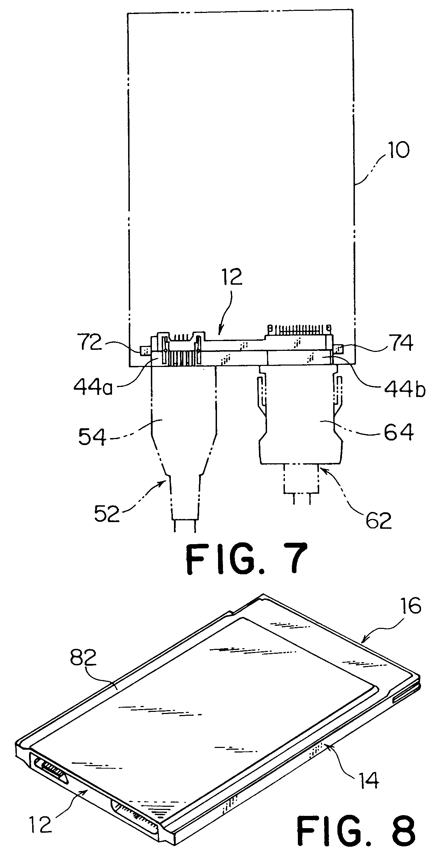

Fig. 7 shows the relationship in position between the back connector 12 and the frame integral type connector 10 and a state where the PC card is coupled to cable connectors serving as mating connectors. The illustrated back connector 12 is a composite socket connector having four pin contacts plus fifteen pin contacts. Accordingly, the PC card comprising the back connector 12 is used as the FAX/MODEM card and the LAN card.

More specifically, a first cable harness 52 for the FAX/MODEM comprises a first cable connector 54 including a first plug section (not shown) which receives a plurality of first female contacts (not shown). A second cable harness 62 for the LAN comprises a second cable connector 64 including a second plug section (not shown) which receives a plurality of second female contacts (not shown). The first plug section of the first cable connector 54 in the first cable harness 52 is fitted to the first socket section 44a of the back connector 12 with the first pin contacts 46 in the first socket section 44a electrically connected to the first female contacts in the first plug section. Similarly, the second plug section of the second cable connector 64 in the second cable harness 62 is fitted to the second socket section 44b of the back connector 12 with the second pin contacts 48 in the second socket section 44b electrically connected to the second female contacts in the second plug section.

Fig. 8 is a perspective view of the PC card illustrated in Fig. 3.

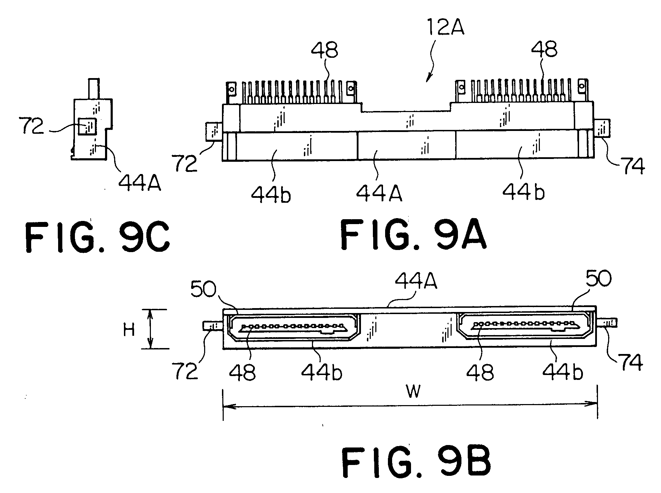

Figs. 9A through 9C collectively show the structure of another back connector 12A. Fig. 9A is a plan view of the back connector 12A, Fig. 9B is a front view of the back connector 12A, and Fig. 9C is a left-hand side view of the back connector 12A. The illustrated back connector 12A is a composite socket connector having fifteen pin contacts plus fifteen pin contacts. In particular, the back connector 12A comprises a socket housing 44A including a pair of second socket sections 44b and 44b and second pin contacts 48 received in each of the second socket sections 44b. The second pin contacts 48 are enclosed with the shell 50.

The back connector 12A further comprises the pair of projections 72 and 74 at longitudinal both ends thereof in the similar manner to the back connector 12. The pair of the projections 72 and 74 is fitted in the pair of grooves 76 and 78, respectively, and thereby the back connector 12A is integrated into the frame integral type connector 10 at the rear end.

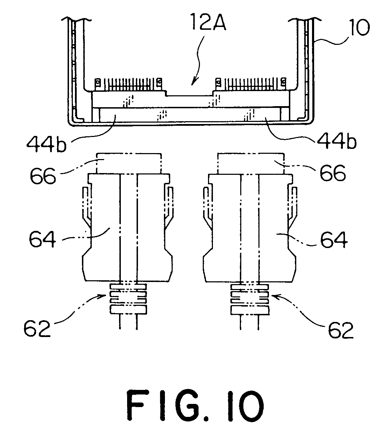

Fig. 10 shows the relationship in position between the back connector 12A and the frame integral type connector 10 and cable connectors serves as mating connectors. The PC card comprising the back connector 12A is used as the LAN cards. More specifically, the second plug sections 66 of the second cable connectors 64 in the pair of the second cable harnesses 62 are fitted to the pair of the second socket sections 44b of the back connector 12A with the second pin contacts 48 in the second socket sections 44b electrically connected to the second female contacts in the second plug sections 66.

As shown in Fig. 6B and Fig. 9B, each back connector of this invention has a common size of the height of H and the width of W in outer shape. But, the back connectors 12 and 12A have different connector sections in the number of pin contacts and in shape so as to correspond to those of the various external apparatuses to be connected thereto. Accordingly, if a plurality of back connectors provided with different numbers of the pin contacts and/or the LED lens are prepared, it is possible to provide the PC cards comprising the frame integral type connector 10 which is capable of corresponding to different purposes. As a result, the number of parts can be decreased.

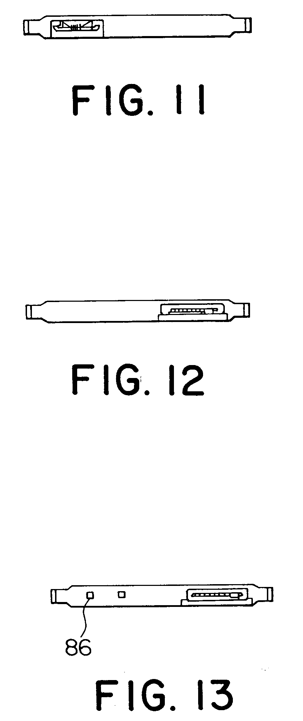

Figs. 11 through 13 show other PC cards to which this invention is applicable. Fig. 11 shows the PC card acting as the FAX/MODEM card. Fig. 12 shows the PC card serving as the LAN card. Fig. 13 shows the PC card which is operable as the LAN card with an operation ascertainment function. The LAN card with the operation ascertainment function illustrated in Fig. 13 comprises an LED lens 86. The LED lens 86 is for ascertaining a fitting condition of the front connector 16 receiving sixty-eight female contacts when the PC card in question is inserted in the slot of the personal computer. That is, the LED lens 86 lights up when the PC card in question is certainly inserted in the slot of the personal computer with the female contacts in the front connector 16 electrically connected to the pin contacts in the slot.

While this invention has far been described in conjunction with a few preferred embodiments thereof, it will now be readily possible for those skilled in the art to put this invention into practice in various other manners.

## Claims

1. A PC card comprising a frame (14) on which a printed circuit board (80) is mounted, the printed circuit board mounting a number of electronic parts thereon, said frame having front and rear ends; a front connector (16) lying at the front end of said frame to connect to a personal computer; and a back connector (12, 12A) lying at the rear end of said frame to connect to an external apparatus, said frame comprising opposite side beams (22, 24) extending in parallel to each other and a front cross beam (16) extending between the opposite side beams at the front end thereof, said front connector (16) being molded integrally with the front cross beam (16), characterized in that one of a plurality of back connectors (12, 12A) having a common size in an external form is selectively integrated with said frame at the rear end, each of said back connectors including at least one different connector section.

2. A PC card as claimed in claim 1, wherein said frame further comprises a rear cross beam (34) extending between the opposite side beams at the rear end thereof, said rear cross beam being for supporting said back connector.

3. A PC card as claimed in claim 1 or 2, wherein said back connector has a pair of projections (72, 74) at longitudinal both ends thereof, said frame having a pair of grooves (76, 78) to which the projections are fitted at opposite sides of the rear end of the opposite side beams to incorporate said back connector with said frame.

4. A PC card as claimed in any one of claims 1 through 3, wherein said back connector includes a plurality of connector sections (44a, 46, 44b, 48).
